# EUROPÄISCHE PATENTSCHRIFT

(11) **EP 3 222 461 B1**
(45) Veröffentlichungstag und Bekanntmachung des Hinweises auf die Patenterteilung: **26.12.2018**
(21) Anmeldenummer: 17162875.3
(22) Anmeldetag: 24.03.2017
(51) Int. Cl.: B60N 2/28, B60N 2/90

(54) **KINDERSITZVORRICHTUNG**
CHILD CAR SEAT DEVICE
SYSTÈME DE SIEGE ENFANT

(30) Priorität: 24.03.2016 DE 102016105601
(43) Veröffentlichungstag der Anmeldung: 27.09.2017
(73) Patentinhaber: RECARO Child Safety GmbH & Co. KG, 95352 Marktleugast (DE)
(72) Erfinder: Schwabbauer, Frank, 95339 Neuenmarkt (DE); Rudakovski, Sergej, 09130 Chemnitz (DE)
(74) Vertreter: Daub, Thomas

(56) Entgegenhaltungen:
- DE-A1- 10 121 123
- DE-T2- 69 514 766
- US-A1- 2015 108 800

## Beschreibung

### Stand der Technik

Die Erfindung betrifft eine Kindersitzvorrichtung nach dem Oberbegriff des Patentanspruchs 1.

In US 2015/0108800 A1, DE 101 21 123 A1 sowie DE 695 14 766 T2 sind bereits Kindersitzvorrichtungen mit zumindest einem Sitzgrundmodul, das dazu vorgesehen ist, auf einem Kraftfahrzeugsitz angebracht zu werden, mit zumindest einem Befestigungsmodul, das dazu vorgesehen ist, das Sitzgrundmodul mit einer Tragstruktur des Kraftfahrzeugsitzes zu koppeln, und mit einem internen Gurtsystem, vorgeschlagen worden.

Die Aufgabe der Erfindung besteht insbesondere darin, eine gattungsgemäße Vorrichtung mit verbesserten Eigenschaften hinsichtlich einer Sicherheit und Benutzerfreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Kindersitzvorrichtung mit zumindest einem Sitzgrundmodul, das dazu vorgesehen ist, auf einem Kraftfahrzeugsitz angebracht zu werden, mit zumindest einem Befestigungsmodul, das dazu vorgesehen ist, das Sitzgrundmodul mit einer Tragstruktur des Kraftfahrzeugsitzes zu koppeln, und mit einem internen Gurtsystem.

Es wird vorgeschlagen, dass die Kindersitzvorrichtung zumindest eine Sicherungsvorrichtung aufweist, die dazu vorgesehen ist, ein zeitgleiches Verwenden des Befestigungsmoduls und des internen Gurtsystems zu verhindern. Unter einer "Kindersitzvorrichtung" soll dabei insbesondere eine Vorrichtung verstanden werden, die zumindest einen Teil oder einen ganzen Kindersitz ausbildet, der dazu vorgesehen ist, in einem Kraftfahrzeug angebracht zu werden, wobei ein Kind und/oder ein Kleinkind darin sitzend und/oder liegend sicher transportiert werden kann. Unter einem "Sitzgrundmodul" soll dabei insbesondere ein tragendes Modul des Kindersitzes verstanden werden, das vorzugsweise zumindest einen Teil einer Sitzbodeneinheit des Kindersitzes ausbildet und das dazu vorgesehen ist, Kräfte, die auf den Kindersitz wirken, in die Tragstruktur des Kraftfahrzeugs einzuleiten. Unter einem "Kraftfahrzeugsitz" soll dabei insbesondere ein fest in einem Kraftfahrzeug angeordneter Passagiersitz verstanden werden, auf dem ein Passagier während einer Fahrt sitzen kann. Dabei kann der Kraftfahrzeugsitz vorteilhaft auch als ein Teil einer Sitzreihe des Kraftfahrzeugs ausgebildet sein. Unter "angebracht" soll dabei insbesondere in einer vorgesehenen Weise an und/oder auf dem Kraftfahrzeugsitz angeordnet verstanden werden, so dass der Kindersitz zum sicheren Transport in dem Kraftfahrzeug gesichert werden kann. Zu einer betriebssicheren Anbindung des Kindersitzes auf dem Kraftfahrzeugsitz kann der Kindersitz mit einem fahrzeuginternen Gurt in Kombination mit dem Befestigungsmodul befestigt werden, um eine Stabilität und/oder Positionierung des Kindersitzes im Kraftfahrzeug zu gewährleisten oder zu verbessern. Unter einem "Befestigungsmodul" soll dabei insbesondere ein Modul verstanden werden, das zur Anbindung des Kindersitzes an den Kraftfahrzeugsitz wenigstens ein Formschlusselement umfasst, das zur Anbindung an den Kraftfahrzeugsitz dazu vorgesehen ist, einen Formschluss mit einem korrespondierend ausgebildeten Formschlusselement der Tragstruktur des Kraftfahrzeugsitzes einzugehen. Dabei ist das Befestigungsmodul vorzugsweise dazu vorgesehen, eine Stabilität und/oder eine Positionierung des Kindersitzes in dem Kraftfahrzeug zu erhöhen oder zu gewährleisten. Unter einer "Tragstruktur" soll dabei insbesondere eine Tragstruktur des Kraftfahrzeugsitzes und oder des Kraftfahrzeugs verstanden werden, über die auf den Kraftfahrzeugsitz einwirkende Kräfte abgeleitet werden können. Unter "koppeln" soll dabei insbesondere in einer Art und Weise verbinden verstanden werden, mittels der eine betriebssichere Anbindung des Kindersitzes an den Kraftfahrzeugsitz erhöht wird. Dabei soll unter "koppeln" insbesondere über zumindest eine Form- und/oder Kraftschlussverbindung fest und starr verbunden verstanden werden. Unter einem "internen Gurtsystem" soll dabei insbesondere ein für ein Kleinkind vorgesehenes, fest mit dem Kindersitz verbundenes Gurtsystem verstanden werden, das insbesondere zur Sicherung von Kleinkindern unter 18 kg und/oder unter einer Größe von 105 cm vorgesehen ist. Dabei handelt es sich bei dem internen Gurtsystem vorzugsweise um ein 5-Punkt-Gurtsystem, das mehrere miteinander verbundene Gurte umfasst, die über ein gemeinsames Gurtschloss zum Sichern des Kindes miteinander verbunden werden können. Grundsätzlich ist es auch denkbar, dass das interne Gurtsystem als ein 3-Punkt-Gurtsystem, als ein 6-Punkt-Gutsystem oder ein Fangkörpersystem ausgebildet ist. Dabei ist das interne Gurtsystem insbesondere unterschiedlich von einem externen, fahrzeugseitigen Gurtsystem, welches fest in dem Fahrzeug integriert ist, ausgebildet. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Sicherheitsvorrichtung" soll dabei insbesondere eine Vorrichtung verstanden werden, die dazu vorgesehen ist, ein nicht bestimmungsgemäßes und/oder gefährliches Nutzen einer Einheit und/oder eines Moduls zu verhindern. Durch eine erfindungsgemäße Ausgestaltung kann vorteilhaft ein Kindersitz bereitgestellt werden, in dem ein falsches Verwenden des internen Gurtsystems und/oder des Befestigungssystems verhindert werden kann. Dadurch kann insbesondere eine Sicherheit des Kindersitzes vorteilhaft erhöht werden.

Weiter wird vorgeschlagen, dass die Sicherungsvorrichtung dazu vorgesehen ist, das Befestigungsmodul in einem Betriebszustand, in dem das interne Gurtsystem in einer Gebrauchsstellung ist, in einer Nicht-Gebrauchsstellung zu verriegeln. Unter einer "Gebrauchsstellung" soll dabei insbesondere eine Stellung verstanden werden, in der ein Modul und/oder ein System, wie insbesondere das Befestigungsmodul und/oder das Gurtsystem, in der entsprechend vorgesehenen Weise benutzbar ist. In der Gebrauchsstellung des Befestigungsmoduls kann der Kindersitz über das Befestigungsmodul an einen Kraftfahrzeugsitz angebunden werden. In der Gebrauchsstellung des internen Gurtsystems kann ein in dem Kindersitz sitzendes Kind mittels des internen Gurtsystems in dem Kindersitz angeschnallt und dadurch gesichert werden. Unter einer "Nicht-Gebrauchsstellung" soll dabei insbesondere eine Stellung verstanden werden, in der ein Modul und/oder ein System, wie insbesondere das Befestigungsmodul und/oder das Gurtsystem, in der entsprechend vorgesehenen Weise nicht benutzbar ist. In der Nicht-Gebrauchsstellung des Befestigungsmoduls kann der Kindersitz über das Befestigungsmodul nicht an einen Kraftfahrzeugsitz angebunden werden. In der Nicht-Gebrauchsstellung des internen Gurtsystems kann ein in dem Kindersitz sitzendes Kind mittels des internen Gurtsystems in dem Kindersitz angeschnallt und dadurch gesichert werden. Dadurch kann vorteilhaft einfach verhindert werden, dass das Befestigungsmodul zur Befestigung des Kindersitzes verwendet wird, während das interne Gurtsystem verwendet wird.

Ferner wird vorgeschlagen, dass die Sicherungsvorrichtung wenigstens einen Verstaubereich umfasst, in dem zumindest ein Teil des internen Gurtsystems verstaubar ist. Unter einem "Verstaubereich" soll dabei insbesondere ein Bereich verstanden werden, in dem ein Element und/oder ein Modul in einem Betriebszustand in einer dafür vorgesehenen Weise verstaut werden kann. Unter einem "Teil des Gurtsystems" soll dabei ein Bestandteil des Gurtsystems, wie insbesondere zumindest ein Teil eines Gurts, einer Gurtzunge und/oder insbesondere eines Gurtschlosses, verstanden werden. Unter "verstaubar" soll dabei insbesondere zumindest teilweise darin angeordnet verstanden werden. Dadurch kann das Gurtsystem bei Nichtgebrauch besonders vorteilhaft und für einen Bediener und ein auf dem Kindersitz sitzendes Kind nicht störend verstaut werden.

Es wird weiterhin vorgeschlagen, dass die Sicherungsvorrichtung wenigstens ein Verriegelungselement umfasst, das durch das in dem Verstaubereich angeordnete Teil des Gurtsystems betätigbar ist. Unter einem "Verriegelungselement" soll dabei insbesondere ein Element verstanden werden, das in zumindest einem Betriebszustand ein weiteres Element in einer definierten Stellung verriegelt. Dabei weist das Verriegelungselement vorzugsweise zumindest zwei Betriebszustände auf in denen das Verriegelungselement wenigstens zwei unterschiedliche Stellungen aufweist. In einem ersten Betriebszustand ist das Verriegelungselement in einer Verriegelstellung angeordnet, in der das Verriegelungselement das weitere Element verriegelt. In einem zweiten Betriebszustand ist das Verriegelungselement in einer Entriegelstellung angeordnet, in der das Verriegelungselement das weitere Element nicht verriegelt und sich das weitere Element dadurch in einem definierten Bereich bewegen kann. Dadurch kann die Sicherungsvorrichtung besonders einfach betätigt werden.

Des Weiteren wird vorgeschlagen, dass das Verriegelungselement in einem Betriebszustand, in dem der zumindest eine Teil des Gurtsystems korrekt in dem Verstaubereich angeordnet ist, dazu vorgesehen ist, eine Entriegelstellung einzunehmen. Unter einem "korrekt angeordneten Zustand" soll dabei insbesondere ein Zustand verstanden werden, in dem das Element, wie insbesondere ein Teil des Gurtsystems, vorzugsweise das Gurtschloss, in einer dafür vorgesehenen Weise in dem Verstaubereich angeordnet ist. Unter einer "Entriegelstellung" soll dabei insbesondere eine Stellung des Verriegelungselements verstanden werden, in der das Verriegelungselement so angeordnet ist, dass das Verriegelungselement ein Element, das über das Verriegelungselement verriegelbar ist, freigibt, sodass sich dieses in einem dafür vorgesehenen definierten Bereich bewegen kann. Dadurch kann das Verriegelungselement besonders einfach und vorteilhaft betätigt werden.

Weiterhin wird vorgeschlagen, dass das Verriegelungselement in einem Betriebszustand, in dem der zumindest eine Teil des Gurtsystems nicht korrekt in dem Verstaubereich angeordnet ist, dazu vorgesehen ist, eine Verriegelstellung einzunehmen. Unter einem "nicht korrekt in dem Verstaubereich angeordneten Zustand" soll dabei insbesondere ein Zustand verstanden werden, in dem das Element, wie insbesondere ein Teil des Gurtsystems, vorzugsweise das Gurtschloss, nicht in einer dafür vorgesehenen Weise in dem Verstaubereich angeordnet ist, wobei das Gurtsystem dabei vorzugsweise in einer dafür vorgesehenen Weise dazu genutzt werden kann, ein in dem Kindersitz sitzendes Kind in dem Kindersitz zu sichern. Unter einer "Verriegelstellung" soll dabei insbesondere eine Stellung des Verriegelungselements verstanden werden, in der das Verriegelungselement so angeordnet ist, dass das Verriegelungselement ein Element, das über das Verriegelungselement verriegelbar ist, sperrt, so dass sich dieses in nicht einem dafür vorgesehenen definierten Bereich bewegen kann. Unter einer Verriegelstellung soll dabei insbesondere eine Stellung verstanden werden, in der ein zu verriegelndes Element gesperrt ist und nicht in seiner vorhergesehenen Weise bewegt werden kann. Dadurch kann das Verriegelungselement in einem Zustand, in dem das Gurtsystem verwendet wird, vorteilhaft und einfach verriegelt werden.

Außerdem wird vorgeschlagen, dass die Sicherungsvorrichtung zumindest ein Abdeckelement umfasst, das zumindest dazu vorgesehen ist, den Verstaubereich in einem geschlossenen Zustand zu verdecken und in einem geöffneten Zustand freizugeben. Unter einem "Abdeckelement" soll dabei insbesondere ein Element, wie beispielsweise ein Deckel, wie insbesondere ein dünnwandiger Deckel, verstanden werden, das zwischen zumindest zwei Zuständen, wie insbesondere einem geschlossenen Zustand und einem geöffneten Zustand, verstellt werden kann. In einem geöffneten Zustand ist das Abdeckelement dabei in einer geöffneten Stellung. In der geschlossenen Stellung ist das Abdeckelement in einer geschlossenen Stellung. Dabei ist das Abdeckelement vorzugsweise beweglich gelagert. Insbesondere ist das Abdeckelement dabei schwenkbar und/oder drehbar gelagert und kann zwischen einer geschlossenen Stellung und einer geöffneten Stellung verschwenkt werden. Grundsätzlich ist es ebenso denkbar, dass das Abdeckelement durch eine Linearverschiebung zwischen einer geschlossenen Stellung und einer geöffneten Stellung verstellt werden kann. Grundsätzlich ist auch eine kombinierte Bewegung aus einer Schwenkung und einer Linearverschiebung da. Grundsätzlich ist es auch denkbar, dass das Abdeckelement zwischen dem geöffneten Zustand und dem geschlossenen Zustand über eine Linearführung verschoben wird. Grundsätzlich ist es auch denkbar, dass das Abdeckelement in dem geschlossenen Zustand über wenigstens ein Form- und/oder Kraftschlusselement an ein abzudeckendes Element angebunden ist und in dem geöffneten Zustand davon zumindest teilweise getrennt ist. Dabei ist es denkbar, dass das Abdeckelement über ein Sicherungsband mit dem abzudeckenden Element verbunden ist. Dadurch kann der Verstaubereich besonders vorteilhaft abgedeckt werden. Es wird weiter vorgeschlagen, dass die Sicherungsvorrichtung zumindest ein Sperrelement umfasst, das dazu vorgesehen ist, das Abdeckelement in zumindest einem Betriebszustand zu verriegeln. Unter einem "Sperrelement" soll dabei insbesondere ein Element verstanden werden, das in einem Verriegelzustand ein anderes Element, wie insbesondere das Abdeckelement, verriegelt und in einem Entriegelzustand freigibt. Dadurch kann das Abdeckelement in einem Betriebszustand, insbesondere in einem Zustand, in dem das Befestigungsmodul in einer Gebrauchsstellung ist, verriegelt werden und so das in dem Verstaubereich angeordnete Gurtschloss des Gurtsystems sichern. Die erfindungsgemäße Kindersitzvorrichtung soll hierbei nicht auf die oben beschriebene Anwendung und Ausführungsform beschränkt sein. Insbesondere kann die erfindungsgemäße Kindersitzvorrichtung zu einer Erfüllung einer hierin beschriebenen Funktionsweise eine von einer hierin genannten Anzahl von einzelnen Elementen, Bauteilen und Einheiten abweichende Anzahl aufweisen, solange sich der Gegenstand auf die in den Ansprüchen beschriebenen Ausführungen beschränkt.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer erfindungsgemäßen Kindersitzvorrichtung mit einem teilweise demontiert dargestellten Kindersitz,
- Fig. 2: eine schematische Seitenansicht des Kindersitzes mit einer Befestigungsvorrichtung in einer Nicht-Gebrauchsstellung,
- Fig. 3: eine schematische Seitenansicht des Kindersitzes mit einer Befestigungsvorrichtung in einer Gebrauchsstellung,
- Fig. 4: eine schematische Darstellung des Kindersitzes, mit teilweise ausgeblendeten Elementen zur besseren Darstellung einer im inneren angeordneten Sicherungsvorrichtung mit einem internen Gurtsystem in einer Gebrauchsstellung,
- Fig. 5: eine weitere schematische Darstellung der Sicherungsvorrichtung in einer anderen Ansicht und
- Fig. 6: eine weitere schematische Darstellung der Sicherungsvorrichtung in einer anderen Ansicht.

### Beschreibung des Ausführungsbeispiels

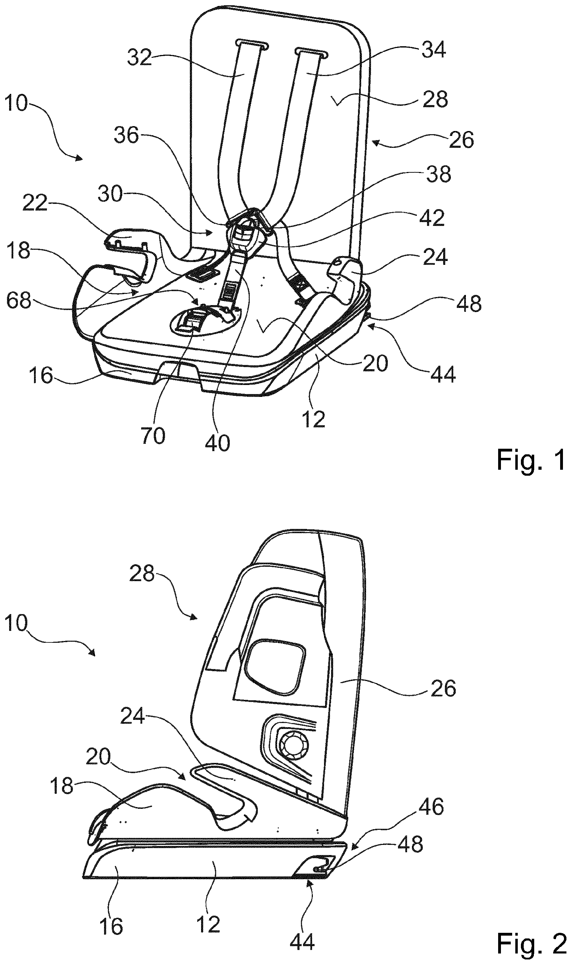

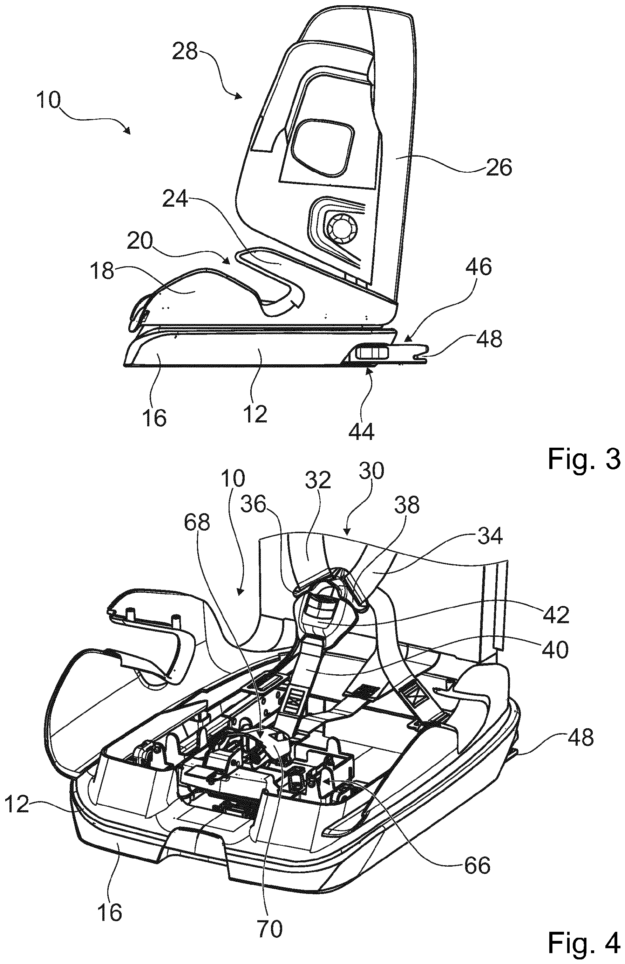

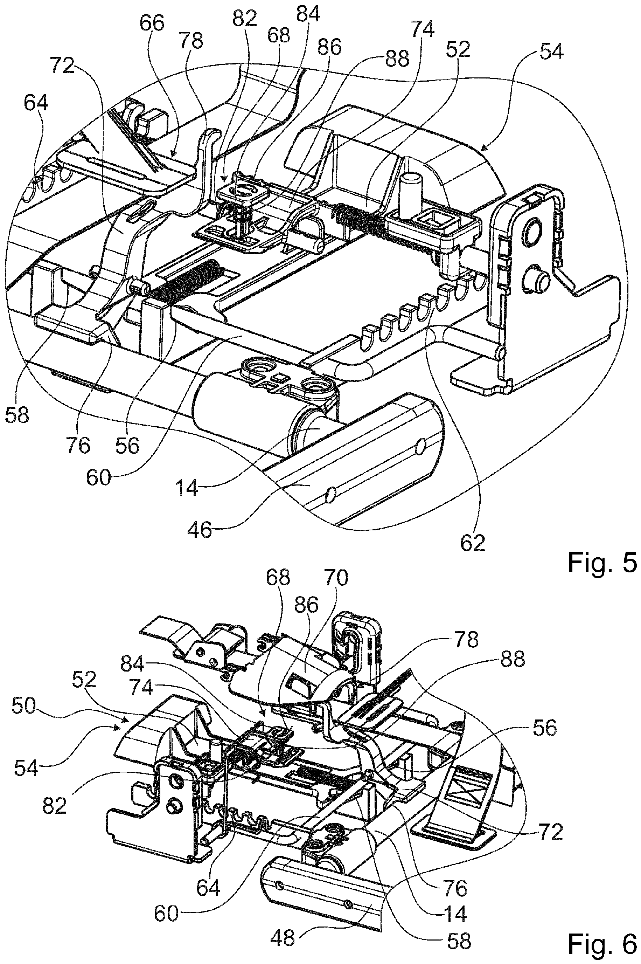

Die Figuren 1 bis 6 zeigen ein Ausführungsbeispiel einer erfindungsgemäßen Kindersitzvorrichtung. Die Kindersitzvorrichtung ist Teil eines Kindersitzes 10. Der Kindersitz 10 ist als ein Kraftfahrzeugkindersitz ausgebildet. Der Kindersitz 10 ist dazu vorgesehen, in einem Kraftfahrzeug angebracht zu werden. Der Kindersitz 10 ist dabei dazu vorgesehen, auf einem Kraftfahrzeugsitz oder einer Kraftfahrzeugsitzbank angeordnet zu werden. Der Kindersitz 10 ist dazu vorgesehen, dass ein Kind mit einem Gewicht von 9 kg bis 36 kg und/oder einer Größe von 74 cm bis 150 cm darin in einem Kraftfahrzeug sicher befördert werden kann.

Die Kindersitzvorrichtung weist ein Sitzgrundmodul 12 auf. Das Sitzgrundmodul 12 ist dazu vorgesehen, auf dem Kraftfahrzeugsitz angebracht zu werden. Das Sitzgrundmodul 12 weist eine Unterseite auf, mit der das Sitzgrundmodul 12 in einem in dem Kraftfahrzeug korrekt angeordneten Zustand auf dem Kraftfahrzeugsitz oder der Kraftfahrzeugsitzbank aufliegt. Das Sitzgrundmodul 12 weist eine Tragstruktur 14 auf. Die Tragstruktur 14 des Sitzgrundmoduls 12 bildet eine Struktur des Sitzgrundmoduls 12 aus, über die in den Kindersitz 10 eingeleitete Kraft in den Kraftfahrzeugsitz oder die Kraftfahrzeugsitzbank abgeleitet werden kann. Die Tragstruktur 14 ist dabei vorzugsweise aus miteinander Verbundenen Elementen aus einem Metall gebildet. Grundsätzlich ist es auch denkbar, dass die Tragstruktur 14 aus einem anderen Material oder aus einer Kombination verschiedener anderer Materialien gebildet ist. Das Sitzgrundmodul 12 weist ein Gehäuse 16 auf. Das Gehäuse 16 schließt das Sitzgrundmodul 12 nach außen ab. Das Gehäuse 16 ist dabei vorzugsweise zumindest im Wesentlichen geschlossen ausgebildet. Das Gehäuse 16 ist aus einem Kunststoff gebildet. Das Gehäuse 16 spannt dabei einen Innenraum auf, in dem zumindest die Tragstruktur 14 des Sitzgrundmoduls 12 angeordnet ist.

Der Kindersitz 10 weist einen Sitzboden 18 auf. Der Sitzboden 18 ist dazu vorgesehen, einen Sitzbereich 20 bereitzustellen, auf dem ein in dem Kindersitz 10 sitzendes Kind sitzen kann. Der Sitzboden 18 ist auf einer Oberseite des Sitzgrundmoduls 12 angeordnet. Dabei ist der Sitzboden 18 fest mit dem Sitzgrundmodul 12 verbunden. Grundsätzlich ist es ebenso denkbar, dass der Sitzboden 18 einstückig mit dem Sitzgrundmodul 12 ausgebildet ist. Der Kindersitz 10 weist ein Polsterelement auf, das auf dem Sitzboden 18 angeordnet ist und den Sitzbereich 20 ausbildet. In seinen beiden seitlichen Bereichen bildet der Sitzboden 18 Armlehnen 22, 24 aus. Der Kindersitz 10 weist weiter eine Rückenlehne 26 auf. Die Rückenlehne 26 ist an einem hinteren Ende des Sitzbodens 18 angeordnet. Die Rückenlehne 26 ist an seinem unteren Ende mit dem hinteren Ende des Sitzbodens 18 gekoppelt. Die Rückenlehne 26 und der Sitzboden 18 sind dabei starr miteinander verbunden. Grundsätzlich ist es ebenfalls denkbar, dass die Rückenlehne 26 zumindest teilweise beweglich zu dem Sitzboden 18 ausgebildet ist. Dabei ist es insbesondere denkbar, dass die Rückenlehne 26 zur Ausbildung von unterschiedlichen Sitzpositionen des Kindersitzes 10 um einen definierten Schwenkwinkel verschwenkbar mit dem Sitzboden 18 gekoppelt ist. Die Rückenlehne 26 bildet einen Rückenlehnenbereich 28 aus, an dem ein in dem Kindersitz 10 sitzendes Kind seinen Rücken anlehnen kann. Die Rückenlehne 26 erstreckt sich von einem unteren, dem Sitzboden 18 zugewandten Bereich nach oben von dem Sitzgrundmodul 12 weg.

Die Kindersitzvorrichtung umfasst ein internes Gurtsystem 30. Das interne Gurtsystem 30 ist als ein in den Kindersitz 10 integriertes Gurtsystem ausgebildet. Das interne Gurtsystem 30 ist als ein 5-Punkt-Gurtsystem ausgebildet. Grundsätzlich ist es auch denkbar, dass das interne Gurtsystem als ein anderes, dem Fachmann als sinnvoll erscheinendes Gurtsystem ausgebildet ist. Das interne Gurtsystem 30 ist zur Sicherung von kleineren Kindern in dem Kindersitz 10 vorgesehen. Das interne Gurtsystem 30 ist zur Sicherung von Kindern von einem Gewicht von 9 kg bis 18 kg und/oder einer Größe von 74 cm und 105 cm vorgesehen. Für Kinder dieser Größe und/oder dieses Gewichts ist das interne Gurtsystem 30 zugelassen und kann entsprechende Kinder zuverlässig in dem Kindersitz 10 sichern. Kinder, die größer und oder schwerer sind als 105 cm und/oder 18 Kg, dürfen nicht mehr mit dem internen Gurtsystem 30 in dem Kindersitz 10 gesichert werden. Zur Sicherung von Kindern oberhalb von 18 kg und/oder größer als 105 cm muss ein fahrzeugseitiger Sicherheitsgurt verwendet werden. Der fahrzeugseitige Sicherheitsgurt ist dabei insbesondere als ein Dreipunktgurt ausgebildet, der fest mit einer Tragstruktur des Kraftfahrzeugs verbunden ist. Grundsätzlich ist es auch denkbar, dass das fahrzeugseitige Gurtsystem als ein 2-Punkt-Gurt, oder als ein anderes dem Fachmann als sinnvoll erscheinendes Gurtsystem ausgebildet ist. Das interne Gurtsystem 30 umfasst zwei Schultergurte 32, 34. Die Schultergurte 32, 34 verlaufen jeweils von einem oberen Bereich der Rückenlehne 26 bis an einen Seitenbereich des Sitzbodens 18. Das interne Gurtsystem 30 umfasst zwei Gurtanbindungselemente 36, 38. Die Gurtanbindungselemente 36, 38 sind als Formschlusselemente ausgebildet. Die Gurtanbindungselemente 36, 38 sind insbesondere als Gurtzungen ausgebildet. Die Gurtzungen weisen dabei vorzugsweise einen metallenen Kern und eine Kunststoffummantelung auf. Die Gurtanbindungselemente 36, 38 sind jeweils mit einem der Schultergurte 32, 34 verbunden. Das eine Gurtanbindungselement 36 ist mit dem einen Schultergurt 32 verbunden. Das andere Gurtanbindungselement 38 ist mit dem anderen Schultergurt 34 verbunden. Das interne Gurtsystem 30 weist einen unteren Gurt 40 auf. Der untere Gurt 40 ist in einem Schrittbereich des Sitzbodens 18 angeordnet. Ein erstes Ende des unteren Gurts 40 ist in dem Schrittbereich in das Innere des Sitzgrundmoduls 12 geführt. In einem Bereich unter dem Sitzbereich 20 und dem Rückenlehnenbereich 28 sind die Schultergurte 32, 34 und der untere Gurt 40 miteinander verbunden. Das interne Gurtsystem 30 umfasst ein Gurtschloss 42. Das Gurtschloss 42 ist an einem zweiten Ende des unteren Gurtes 40 angebunden. Das Gurtschloss 42 ist dazu vorgesehen, mit den beiden Gurtanbindungselementen 36, 38 eine formschlüssige Verbindung einzugehen. Über das Gurtschloss 42 ist das interne Gurtsystem 30 schließbar. Das Gurtschloss 42 weist ein Betätigungselement auf, das von einem Bediener zum Öffnen des Gurtschlosses 42 und damit zum Überführen des internen Gurtsystems 30 von einem geschlossenen in einen geöffneten Zustand vorgesehen ist. Das Betätigungselement ist dabei vorzugsweise als ein Druckknopf ausgebildet, der, wenn er von einem Bediener gedrückt wird, die mit dem Gurtschloss 42 formschlüssig verbundenen Gurtanbindungselemente 36, 38 von dem Gurtschloss 42 löst und somit das interne Gurtsystem 30 öffnet. Grundsätzlich ist es auch denkbar, dass das Betätigungselement auf eine andere, dem Fachmann als sinnvoll erscheinende Weise ausgebildet ist, wie insbesondere als ein Drehknopf oder ein Zugelement.

Die Kindersitzvorrichtung umfasst ein Befestigungsmodul 44. Das Befestigungsmodul 44 ist dazu vorgesehen, den Kindersitz 10 in zumindest einem Betriebszustand an den Kraftfahrzeugsitz fest anzubinden. Das Befestigungsmodul 44 ist als ein ISOFIX-Modul ausgebildet. Das Befestigungsmodul 44 ist dazu vorgesehen, das Sitzgrundmodul 12 des Kindersitzes 10 mit der Tragstruktur des Kraftfahrzeugsitzes zu koppeln. Über das Befestigungsmodul 44 ist das Sitzgrundmodul 12 des Kindersitzes 10 mit der Tragstruktur des Kraftfahrzeugsitzes verbindbar. Das Befestigungsmodul 44 umfasst zwei Formschlusselemente 46, 48. Die beiden Formschlusselemente 46, 48 sind als ISOFIX-Elemente ausgebildet. Die Formschlusselemente 46, 48 sind in einem hinteren Bereich des Sitzgrundmoduls 12 angeordnet. Das Befestigungsmodul 44 weist eine Gebrauchsstellung und eine Nicht-Gebrauchsstellung auf. In der Nicht-Gebrauchsstellung des Befestigungsmoduls 44 ist das Befestigungsmodul 44 nicht dazu vorgesehen, mit der Tragstruktur des Kraftfahrzeugsitzes verbunden zu werden. In der Nicht-Gebrauchsstellung kann der Kindersitz 10 nicht über das Befestigungsmodul 44 an den Kraftfahrzeugsitz angebunden werden. Die Formschlusselemente 46, 48 des Befestigungsmoduls 44 sind in der Nicht-Gebrauchsstellung im Wesentlichen innerhalb des Gehäuses 16 des Sitzgrundmoduls 12 angeordnet, so dass dieses nicht mehr mit dem Kraftfahrzeug gekoppelt werden kann. In der Gebrauchsstellung des Befestigungsmoduls 44 sind die Formschlusselemente 46, 48 zumindest teilweise außerhalb des Gehäuses 16 des Sitzgrundmoduls 12 angeordnet. Die Formschlusselemente 46, 48 stehen in der Gebrauchsstellung über ein hinteres Ende des Gehäuses 16 des Sitzgrundmoduls 12 hinaus. Dazu bildet das Gehäuse 16 an den entsprechenden Stellen an dem hinteren Ende zwei Öffnungen aus, durch die die Formschlusselemente 46, 48 aus dem Inneren des Gehäuses 16 hinausragen können. In der Gebrauchsstellung, in der die Formschlusselemente 46, 48 aus dem Gehäuse 16 hinausragen, können die Formschlusselemente 46, 48 mit korrespondierend ausgebildeten Formschlusselementen des Kraftfahrzeugsitzes, die hier nicht näher dargestellt sind, formschlüssig verbunden werden. Die Formschlusselemente 46, 48 des Befestigungsmoduls 44 umschließen die Formschlusselemente des Kraftfahrzeugsitzes. Das Befestigungsmodul 44 ist dazu vorgesehen, das Sitzgrundmodul 12 und damit den Kindersitz 10 insbesondere in einem Betriebszustand, in dem kein Kind in dem Kindersitz 10 sitzt, mit dem Kraftfahrzeugsitz zu verbinden. Das Befestigungsmodul 44 ist insbesondere zu einer Ladungssicherung des Kindersitzes 10 auf dem Kraftfahrzeugsitz vorgesehen.

Das Befestigungsmodul 44 umfasst einen Betätigungsmechanismus 50. Der Betätigungsmechanismus 50 ist dazu vorgesehen, das Befestigungsmodul 44 zwischen seiner Gebrauchsstellung und seiner Nicht-Gebrauchsstellung zu verstellen. Der Betätigungsmechanismus 50 umfasst einen Betätigungshebel 52. Der Betätigungshebel 52 ist an einem vorderen Ende des Sitzgrundmoduls 12 angeordnet. Der Betätigungshebel 52 schließt das Gehäuse dabei an dem vorderen Ende zumindest teilweise ab. Insbesondere ein Griffbereich 54 des Betätigungshebels 52 ist dabei von vorne erreichbar und kann dadurch einfach von einem Benutzer ergriffen werden. Der Betätigungshebel 52 ist als ein ausgebildet. Der Betätigungshebel 52 weist eine längliche Erstreckung auf. An einem dem Griffbereich 54 abgewandten Ende weist der Betätigungshebel 52 zwei Mitnahmeelemente 56, 58 auf. Grundsätzlich ist es auch denkbar, dass der Betätigungshebel 52 lediglich ein Mitnahmeelement 56, 58 aufweist. Die Mitnahmeelemente 56, 58 sind als Mitnahmeschrägen ausgebildet. Die Mitnahmeelemente 56, 58 sind als Schrägflächen ausgebildet, die sich in einer dem Griffbereich 54 abgewandten Richtung erheben. Die Mitnahmeelemente 56, 58 weisen dabei einen unteren und einen oberen Anschlag auf. Grundsätzlich ist es auch denkbar, dass die Mitnahmeelemente 56, 58 auf eine andere, dem Fachmann als sinnvoll erscheinende Weise ausgebildet sind, beispielsweise als Nuten. Die Mitnahmeelemente 56, 58 sind dazu vorgesehen, ein Querelement 60 in zumindest einem Betriebszustand mitzunehmen, um das Befestigungsmodul 44 zu verstellen. Das Querelement 60 ist als ein Stabelement ausgebildet. Das Querelement 60 ist mit den Formschlusselementen 46, 48 des Befestigungsmoduls 44 gekoppelt. Das Querelement 60 ist über zwei parallel verlaufende Zahnstangen 62, 64, die mit den Formschlusselementen 46, 48 verbunden sind, mit den Formschlusselementen 46, 48 koppelbar. Je nach Stellung rastet das Querelement 60 in unterschiedlichen Zahnpaarungen der Zahnstangen 62, 64 ein, wobei die Formschlusselemente 46, 48 durch ein axiales Verschieben der Zahnstangen 62, 64 zwischen der Gebrauchsstellung und der Nicht-Gebrauchsstellung verschoben werden können. Die Betätigung des Befestigungsmoduls 44 und die Verstellung zwischen der Gebrauchsstellung und der Nicht-Gebrauchsstellung erfolgt dabei entsprechend aus dem Stand der Technik bekannten Befestigungsmodulen dieser Bauart.

Die Kindersitzvorrichtung umfasst eine Sicherungsvorrichtung 66. Die Sicherungsvorrichtung 66 ist dazu vorgesehen, ein zeitgleiches Verwenden des Befestigungsmoduls 44 und des internen Gurtsystems 30 zu verhindern. Dadurch kann vorteilhaft verhindert werden, dass der Kindersitz 10 während der Verwendung des internen Gurtsystems 30 zur Sicherung eines auf dem Kindersitz 10 sitzenden Kindes mittels des Befestigungsmoduls 44 an dem Kraftfahrzeugsitz befestigt wird. Dadurch muss der Kindersitz 10 über den kraftfahrzeugseitigen Sicherheitsgurt an dem Kraftfahrzeugsitz befestigt werden. Dadurch können unsachgemäße und dadurch gefährliche Befestigungen des Kindersitzes 10 während eines Transports eines Kindes in dem Kindersitz 10 an dem Kraftfahrzeugsitz verhindert werden. Die Sicherungsvorrichtung 66 ist dazu vorgesehen, das Befestigungsmodul 44 in seiner Nicht-Gebrauchsstellung zu verriegeln, wenn das interne Gurtsystem 30 in seiner Gebrauchsstellung ist. Die Sicherungsvorrichtung 66 entriegelt das Befestigungsmodul 44, wenn das interne Gurtsystem 30 von seiner Gebrauchsstellung in seine Nicht-Gebrauchsstellung gebracht wird. Die Sicherungsvorrichtung 66 ist dazu vorgesehen, das interne Gurtsystem 30 in seiner Nicht-Gebrauchsstellung zu verriegeln, wenn das Befestigungsmodul 44 in seiner Gebrauchsstellung ist. Die Sicherungsvorrichtung 66 entriegelt das interne Gurtsystem 30, wenn das Befestigungsmodul 44 von seiner Gebrauchsstellung in seine Nicht-Gebrauchsstellung gebracht wird.

Die Sicherungsvorrichtung 66 umfasst einen Verstaubereich 68. Der Verstaubereich 68 ist dazu vorgesehen, dass zumindest ein Teil des internen Gurtsystems 30 in seiner Nicht-Gebrauchsstellung darin angeordnet und verstaut werden kann. Der Verstaubereich 68 ist in dem Sitzboden 18 angeordnet. Der Verstaubereich 68 ist in einem Schrittbereich des Sitzbodens 18 angeordnet. Der Verstaubereich 68 erstreckt sich bis in das Innere des Sitzgrundmoduls 12. Der Verstaubereich 68 ist dazu vorgesehen, dass das Gurtschloss 42 in ihm verstaut wird. Dabei sind zumindest Teile des unteren Gurtes 40 ebenfalls in dem Verstaubereich 68 verstaubar. Der Verstaubereich 68 ist zu dem Sitzbereich 20, den der Sitzboden 18 aufspannt, zumindest teilweise durch eine Öffnung geöffnet. Über die Öffnung des Verstaubereichs 68 kann das Gurtschloss 42 zur Verstauung in den Verstaubereich 68 eingeführt werden. Die Sicherungsvorrichtung 66 umfasst ein Abdeckelement 70. Das Abdeckelement 70 ist dazu vorgesehen, den Verstaubereich 68 in zumindest einem geschlossenen Zustand zu verschließen. Das Abdeckelement 70 ist als ein dünnwandiger Deckel ausgebildet. Das Abdeckelement 70 ist beweglich mit dem Sitzboden 18 verbunden. Dabei ist das Abdeckelement 70 insbesondere schwenkbar an den Sitzboden 18 angebunden. Dazu weist die Sicherungsvorrichtung 66 eine Schwenklagerung auf. Die Schwenklagerung wird dabei von koaxial zueinander ausgerichteten Aufnahmelöchern in dem Sitzboden 18 und korrespondierend ausgebildeten Stiften an dem Abdeckelement 70 ausgebildet. Die Stifte des Abdeckelements 70 sind gleitend in den Aufnahmelöchern des Sitzbodens 18 gelagert.

Das Abdeckelement 70 kann zwischen einer geöffneten Stellung und einer geschlossenen Stellung verschwenkt werden. In der geschlossenen Stellung deckt das das Abdeckelement 70 die Öffnung des Verstaubereichs 68 ab. Dadurch ist der Verstaubereich 68 verschlossen. In der geschlossenen Stellung des Abdeckelements 70 kann dabei das Gurtschloss 42 nicht aus dem Verstaubereich 68 entnommen oder in ihn eingeführt werden. In der geöffneten Stellung ist das Abdeckelement 70 aus der geschlossenen Stellung herausgeschwenkt. In der geöffneten Stellung gibt das Abdeckelement 70 die Öffnung des Verstaubereichs 68 frei. In der geöffneten Stellung des Abdeckelements 70 kann dabei das Gurtschloss 42 aus dem Verstaubereich 68 entnommen oder in ihn eingeführt werden.

Die Sicherungsvorrichtung 66 umfasst ein Sperrelement 72. Das Sperrelement 72 ist dazu vorgesehen, das Abdeckelement 70 in zumindest einem Betriebszustand zu verriegeln. Das Sperrelement 72 ist dazu vorgesehen, das Abdeckelement 70 in seiner geschlossenen Stellung zu verriegeln. Das Sperrelement 72 ist dazu vorgesehen, das Abdeckelement 70 in der geschlossenen Stellung zu verriegeln, wenn das Befestigungsmodul 44 nicht in seiner Nicht-Gebrauchsstellung ist. Ist das Befestigungsmodul 44 in seiner Gebrauchsstellung, sind also die Formschlusselemente 46, 48 ausgefahren, ist das Abdeckelement 70 in einer geschlossenen Stellung und verschließt dadurch den Verstaubereich 68. Dadurch kann verhindert werden, dass das Gurtschloss 42 in einer Gebrauchsstellung des Befestigungsmoduls 44 aus dem Verstaubereich 68 entnommen werden kann und so das interne Gurtsystem 30 von seiner Nicht-Gebrauchsstellung in seine Gebrauchsstellung überführt wird. Dadurch kann insbesondere eine unsachgemäße Verwendung des internen Gurtsystems 30 während der Verwendung des Befestigungsmoduls 44 verhindert werden. Das Sperrelement 72 ist als ein Kipphebel ausgebildet. Das Sperrelement 72 ist in dem Sitzgrundmodul 12 schwenkbar gelagert. Das Sperrelement 72 bildet an einem ersten, unteren Ende einen Kontaktbereich 76 aus. Der Kontaktbereich 76 ist dazu vorgesehen, in zumindest einem Zustand in Kontakt mit zumindest einem Teil des Befestigungsmoduls 44 zu treten. Der Kontaktbereich 76 ist dazu vorgesehen, einen beweglichen Teil des Befestigungsmoduls 44, der mit den Formschlusselementen 46, 48 gekoppelt ist, zu kontaktieren. Das Sperrelement 72 weist zur Verriegelung des Abdeckelements 70 an einem zweiten, oberen Ende einen Sperrbereich 78 auf. Der Sperrbereich 78 kann dabei beispielsweise Formschlusselemente umfassen, die in der Verriegelstellung in einen formschlüssigen Kontakt mit korrespondierend ausgebildeten Formschlusselementen des Abdeckelements 70 kommen, um so das Abdeckelement 70 zu verriegeln. In der Nicht-Gebrauchsstellung des Befestigungsmoduls 44 steht der Kontaktbereich 76 in Kontakt mit dem Befestigungsmodul 44. Dabei wird das Sperrelement 72 in der Nicht-Gebrauchsstellung des Befestigungsmoduls 44 ausgelenkt. In der Nicht-Gebrauchsstellung des Befestigungsmoduls 44 ist das Sperrelement 72 in seine Entriegelstellung ausgelenkt. In seiner Entriegelstellung gibt das Sperrelement 72 das Abdeckelement 70 frei. In der Nicht-Gebrauchsstellung des Befestigungsmoduls 44 steht der Sperrbereich 78 nicht in Kontakt mit dem Abdeckelement 70 und verriegelt das Abdeckelement 70 dadurch nicht. In der Gebrauchsstellung des Befestigungsmoduls 44 kontaktiert der Kontaktbereich 76 das Befestigungsmodul 44 nicht. In der Gebrauchsstellung des Befestigungsmoduls 44 ist das Sperrelement 72 in seiner unausgelenkten Ruhestellung. In der Ruhestellung ist das Sperrelement 72 in seiner Verriegelstellung. In der Verriegelstellung verriegelt das Sperrelement 72 das Abdeckelement 70 in seiner geschlossenen Stellung. In der unausgelenkten Ruhestellung, also der Verriegelstellung, kontaktiert der Sperrbereich 78 das Abdeckelement 70 und verriegelt es dadurch. Die Sicherungsvorrichtung 66 umfasst ein nicht näher dargestelltes Federelement, das eine Federkraft auf das Sperrelement 72 ausübt. Die von dem Federelement auf das Sperrelement 72 wirkende Kraft ist dazu vorgesehen, das Sperrelement 72 in seine Ruhestellung zu bringen und dieses dort zu halten.

Die Sicherungsvorrichtung 66 umfasst ein Verriegelungselement 74. Das Verriegelungselement 74 ist in dem Verstaubereich 68 angeordnet. Das Verriegelungselement 74 ist dazu vorgesehen, von einem Teil des Gurtsystems 30 betätigt zu werden. Das Verriegelungselement 74 ist dazu vorgesehen, von dem Gurtschloss 42 betätigt zu werden. Das Verriegelungselement 74 weist eine Verriegelstellung und eine Entriegelstellung auf. In einem unbetätigten Zustand ist das Verriegelungselement 74 in seiner Verriegelstellung. Ist das interne Gurtsystem 30 in einer Gebrauchsstellung und dadurch das Gurtschloss 42 nicht in dem Verstaubereich 68 angeordnet, ist das Verriegelungselement 74 unbetätigt und dadurch in seiner Verriegelstellung. In einem betätigten Zustand ist das Verriegelungselement 74 in seiner Entriegelstellung. Ist das Gurtschloss 42 in einer korrekten Weise in dem Verstaubereich 68 angeordnet, betätigt das Gurtschloss 42 das Verriegelungselement 74 und bringt es in seine Entriegelstellung. Ist das Gurtschloss 42 nicht korrekt, beispielsweise nicht vollständig in dem Verstaubereich 68 angeordnet, ist das Verriegelungselement 74 unbetätigt.

In seiner Verriegelstellung verriegelt das Verriegelungselement 74 das Befestigungsmodul 44 in seiner Nicht-Gebrauchsstellung. Verriegelt das Verriegelungselement 74 das Befestigungsmodul 44, kann der Kindersitz 10 nicht über die Formschlusselemente 46, 48 des Befestigungsmoduls 44 mit dem Kraftfahrzeugsitz verbunden werden. In einer Entriegelstellung des Verriegelungselements 74 ist das Befestigungsmodul 44 entriegelt und kann zwischen seiner Nicht-Gebrauchsstellung und seiner Gebrauchsstellung verstellt werden. Ist das Gurtschloss 42 korrekt in dem Verstaubereich 68 angeordnet, verriegelt das Verriegelungselement 74 das Befestigungsmodul 44.

Das Verriegelungselement 74 ist als federbelastetes Element ausgebildet. Die Sicherungsvorrichtung 66 umfasst ein Federelement 82, das eine Federkraft auf das Verriegelungselement 74 ausübt. Das Verriegelungselement 74 ist von dem Federelement 82 in seine Verriegelstellung gedrückt. Das Verriegelungselement 74 ist als ein verschwenkbares Element ausgebildet. Das Verriegelungselement 74 ist schwenkbar in dem Sitzgrundmodul 12 gelagert. Dazu bildet das Verriegelungselement 74 zwei koaxial zueinander verlaufende Lagerstifte auf, die in korrespondierenden, nicht näher dargestellten Gleitlageraufnahmen des Sitzgrundmoduls 12 gelagert sind. In seinem verriegelten Zustand ist das Verriegelungselement 74 in seiner Ruheposition und über das Federelement 82 mit einem Sperrbereich in einen Kontakt mit dem Betätigungshebel 52 gedrückt. Dadurch sperrt das Verriegelungselement 74 den Betätigungshebel 52 und das Befestigungsmodul 44 kann nicht aus der Nicht-Gebrauchsstellung in die Gebrauchsstellung gebracht werden. Die Sicherungsvorrichtung 66 weist ein Betätigungselement 84 auf, das dazu vorgesehen ist, das Verriegelungselement 74 zu betätigen. Das Betätigungselement 84 ist von einem Stift gebildet, der an einer Oberseite einen flächigen Kontaktbereich 86 ausbildet. Der Kontaktbereich 86 ist in dem Verstaubereich 68 angeordnet. Das Betätigungselement 84 ist axial verschiebbar in dem Sitzgrundmodul 12 gelagert. Durch ein Federelement 88 ist das Betätigungselement 84 in eine obere Stellung gedrückt, in der das Betätigungselement 84 das Verriegelungselement 74 nicht betätigt. Bei einem korrekten Einführen des Gurtschlosses 42 in den Verstaubereich 68 wird das Betätigungselement 84 von dem Gurtschloss 42 nach unten ausgelenkt und betätigt so das Verriegelungselement 74. Bei der Betätigung wird das Verriegelungselement 74 in seine Entriegelstellung verschwenkt und die formschlüssige Verbindung zwischen dem Verriegelungselement 74 und dem Betätigungshebel 52 löst sich, wodurch das Befestigungsmodul 44 mittels des Betätigungshebels 52 verstellt werden kann.

### Bezugszeichen

- 10: Kindersitz
- 12: Sitzgrundmodul
- 14: Tragstruktur
- 16: Gehäuse
- 18: Sitzboden
- 20: Sitzbereich
- 22: Armlehne
- 24: Armlehne
- 26: Rückenlehne
- 28: Rückenlehnenbereich
- 30: internes Gurtsystem
- 32: Schultergurt
- 34: Schultergurt
- 36: Gurtanbindungselement
- 38: Gurtanbindungselement
- 40: Gurt
- 42: Gurtschloss
- 44: Befestigungsmodul
- 46: Formschlusselement
- 48: Formschlusselement
- 50: Betätigungsmechanismus
- 52: Betätigungshebel
- 54: Griffbereich
- 56: Mitnahmeelement
- 58: Mitnahmeelement
- 60: Querelement
- 62: Zahnstange
- 64: Zahnstange
- 66: Sicherungsvorrichtung
- 68: Verstaubereich
- 70: Abdeckelement
- 72: Sperrelement
- 74: Verriegelungselement
- 76: Kontaktbereich
- 78: Sperrbereich
- 82: Federelement
- 84: Betätigungselement
- 86: Kontaktbereich
- 88: Federelement

## Patentansprüche

1. Kindersitzvorrichtung mit zumindest einem Sitzgrundmodul (12), das dazu vorgesehen ist, auf einem Kraftfahrzeugsitz angebracht zu werden, mit zumindest einem Befestigungsmodul (44), das dazu vorgesehen ist, das Sitzgrundmodul (12) mit einer Tragstruktur des Kraftfahrzeugsitzes zu koppeln, und mit einem internen Gurtsystem (30), **gekennzeichnet durch** zumindest eine Sicherungsvorrichtung (66), die dazu vorgesehen ist, ein zeitgleiches Verwenden des Befestigungsmoduls (44) und des internen Gurtsystems (30) zu verhindern.

2. Kindersitzvorrichtung nach Anspruch 1, **dadurch gekennzeichnet, dass** die Sicherungsvorrichtung (66) dazu vorgesehen ist, das Befestigungsmodul (44) in einem Betriebszustand, in dem das interne Gurtsystem (30) in einer Gebrauchsstellung ist, in einer Nicht-Gebrauchsstellung zu verriegeln.

3. Kindersitzvorrichtung nach Anspruch 1 oder 2, **dadurch gekennzeichnet, dass** die Sicherungsvorrichtung (66) wenigstens einen Verstaubereich (68) umfasst, in dem zumindest ein Teil des internen Gurtsystems (30) verstaubar ist.

4. Kindersitzvorrichtung nach Anspruch 3, **dadurch gekennzeichnet, dass** die Sicherungsvorrichtung (66) wenigstens ein Verriegelungselement (74) umfasst, das durch das in dem Verstaubereich (68) angeordnete Teil des internen Gurtsystems (30) betätigbar ist.

5. Kindersitzvorrichtung nach Anspruch 4, **dadurch gekennzeichnet, dass** das Verriegelungselement (74) in einem Betriebszustand, in dem der zumindest eine Teil des Gurtsystems (30) korrekt in dem Verstaubereich (68) angeordnet ist, dazu vorgesehen ist, eine Entriegelstellung einzunehmen.

6. Kindersitzvorrichtung zumindest nach Anspruch 4, **dadurch gekennzeichnet, dass** das Verriegelungselement (74) in einem Betriebszustand, in dem der zumindest eine Teil des Gurtsystems (30) nicht korrekt in dem Verstaubereich (68) angeordnet ist, dazu vorgesehen ist, eine Verriegelstellung einzunehmen.

7. Kindersitzvorrichtung zumindest nach Anspruch 3, **dadurch gekennzeichnet, dass** die Sicherungsvorrichtung (66) zumindest ein Abdeckelement (70) umfasst, das zumindest dazu vorgesehen ist, den Verstaubereich (68) in einem geschlossenen Zustand zu verdecken und in einem geöffneten Zustand freizugeben.

8. Kindersitzvorrichtung nach Anspruch 7, **dadurch gekennzeichnet, dass** die Sicherungsvorrichtung (66) zumindest ein Sperrelement (72) umfasst, das dazu vorgesehen ist, das Abdeckelement (70) in zumindest einem Betriebszustand zu verriegeln.

9. Kindersitz mit einer Kindersitzvorrichtung nach einem der vorhergehenden Ansprüche.

## Claims

1. Child seat device with at least one basic seat module (12), which is configured to be mounted on a motor vehicle seat, with at least one fixation module (44) that is configured for coupling the basic seat module (12) with a support structure of the motor vehicle seat, and with an internal belt system (30), **characterised by** at least one safeguarding device (66) that is configured to prevent a simultaneous usage of the fixation module (44) and of the internal belt system (30).

2. Child seat device according to claim 1, **characterised in that,** in an operational state in which the internal belt system (30) is in a use position, the safeguarding device (66) is configured for locking the fixation module (44) in a non-use position.

3. Child seat device according to claim 1 or 2, **characterised in that** the safeguarding device (66) comprises at least one stowage region (68), in which at least one component of the internal belt system (30) is stowable.

4. Child seat device according to claim 3, **characterised in that** the safeguarding device (66) comprises at least one locking element (74), via which the component of the internal belt system (30) that is arranged in the stowage region (68) is actuatable.

5. Child seat device according to claim 4, **characterised in that,** in an operational state in which the at least one component of the internal belt system (30) is correctly arranged in the stowage region (68), the locking element (74) is configured to take an unlocking position.

6. Child seat device at least according to claim 4, **characterised in that,** in an operational state in which the at least one component of the internal belt system (30) is not correctly arranged in the stowage region (68), the locking element (74) is configured to take a locking position.

7. Child seat device at least according to claim 3, **characterised in that** the safeguarding device (66) comprises at least one cover element (70), which is at least configured to cover the stowage region (68) in a closed state and to release the stowage region (68) in an open state.

8. Child seat device according to claim 7, **characterised in that** the safeguarding device (66) comprises at least one blocking element (72), which is configured to lock the cover element (70) in at least one operational state.

9. Child seat with a child seat device according to one of the preceding claims.

## Revendications

1. Dispositif de siège enfant avec au moins un module de siège basique (12) prévu pour être monté sur un siège de véhicule automobile, avec au moins un module à fixation (44) prévu pour un couplage du module de siège basique (12) avec une structure porteuse du siège de véhicule automobile, et avec un système interne de sangle(s) (30), **caractérisé par** au moins un dispositif de sauvegarde (66) prévu pour prévenir un usage simultané du module à fixation (44) et du système interne de sangle(s) (30).

2. Dispositif de siège enfant selon la revendication 1, **caractérisé en ce que,** dans un état opératif, dans lequel le système interne de sangle(s) (30) est dans une position d'usage, le dispositif de sauvegarde (66) est prévu à verrouiller le module à fixation (44), dans une position de non-usage.

3. Dispositif de siège enfant selon l'une quelconque des revendications 1 ou 2, **caractérisé en ce que** le dispositif de sauvegarde (66) comporte au moins une région de rangement (68), dans lequel au moins un composant du système interne de sangle(s) (30) est rangeable.

4. Dispositif de siège enfant selon la revendication 3, **caractérisé en ce que** le dispositif de sauvegarde (66) comporte au moins un élément de verrouillage (74), qui est actionnable par le composant du système interne de sangle(s) (30) disposée dans la région de rangement (68).

5. Dispositif de siège enfant selon la revendication 4, **caractérisé en ce que,** dans un état opératif, dans lequel l'au moins un composant du système de sangle(s) (30) est disposé correctement dans la région de rangement (68), l'élément de verrouillage (74) est prévu à prendre une position de déverrouillage.

6. Dispositif de siège enfant au moins selon la revendication 4, **caractérisé en ce que,** dans un état opératif, dans lequel l'au moins un composant du système de sangle(s) (30) n'est pas disposé correctement dans la région de rangement (68), l'élément de verrouillage (74) est prévu à prendre une position de verrouillage.

7. Dispositif de siège enfant au moins selon la revendication 3, **caractérisé en ce que** le dispositif de sauvegarde (66) comporte au moins un élément de couverture (70) prévu à couvrir la région de rangement (68) dans un état fermé et à libérer la région de rangement (68) dans un état ouvert.

8. Dispositif de siège enfant selon la revendication 7, **caractérisé en ce que** le dispositif de sauvegarde (66) comporte au moins un élément de blocage (72) prévu à verrouiller l'élément de couverture (70) dans au moins un état opératif.

9. Siège enfant avec un dispositif de siège enfant selon l'une quelconque des revendications précédentes.
